# EUROPEAN PATENT SPECIFICATION

(11) **EP 4 001 550 B1**
(45) Date of publication and mention of the grant of the patent: **02.10.2024**
(21) Application number: 21204727.8
(22) Date of filing: 26.10.2021
(51) Int. Cl.: E04H 12/10, E04H 12/34, H01Q 1/12

(54) **LIGHTWEIGHT MODULAR TOWER FOR TELECOMMUNICATIONS EQUIPMENT**
LEICHTER MODULARER MAST FÜR TELEKOMMUNIKATIONSAUSRÜSTUNG
TOUR MODULAIRE LÉGÈRE POUR UN ÉQUIPEMENT DE TÉLÉCOMMUNICATIONS

(30) Priority: 18.11.2020 ES 202031157
(43) Date of publication of application: 25.05.2022
(73) Proprietor: Tenllado Infraestructuras, S.L., 14500 Puente Genil Cordoba (ES)
(72) Inventor: TENLLADO PALMA, Manuel, 14500 Puente Genil (ES)
(74) Representative: Toro Gordillo, Ignacio Maria

(56) References cited:
- EP-A1- 1 401 048
- WO-A1-2019/054879
- DE-A1- 102005 030 002
- US-B1- 10 132 098

## Description

### TECHNICAL FIELD

The present invention relates to a structure from which towers for supporting antennas or telecommunications equipment are obtained, the purpose of which is to offer a modular, lightweight, resistant, economical and multipurpose structure. Such a structure is disclosed for example in WO 2019/054879 A1.

Although the preferred field of application of the invention is the telecommunications sector, it is not ruled out that the invention is applicable in other fields wherein similar performance is required, such as wind turbine towers, support for advertising billboards or even power line support.

### BACKGROUND OF THE INVENTION

In the field of telecommunications, as well as other areas in which lattice towers are used as a means of supporting equipment, these towers usually have a structure that, while fulfilling the functions for which they have been intended, have the following limitations or problems:
- They are expensive structures, due to the complex assembly and manufacture thereof.
- They are heavy structures.
- Their resistance can be compromised if the equipment installed on it is modified.
- Access to such equipment is not easy, which is further complicated when the structure is shared between several operators.
- Once the structure is finished, it is immovable, i.e., it cannot be expanded.

### DESCRIPTION OF THE INVENTION

The proposed lightweight modular tower for telecommunications antennas is as according to appended claim 1 and fully solves the problems previously set forth in each and every one of the aspects discussed, based on a simple but highly effective solution.

To do this, and more specifically, the structure of the invention is made up of a series of modules that can be vertically coupled until the desired height is obtained, which are finished with a top closure that can be removed to later expand the structure of the tower, modules wherein a vertical central tube and a series of perimeter uprights participate, which are linked together by means of horizontal rings, concentric to the main central tube, all of them based on a tubular structure, while said perimeter envelope is linked to the central tube through a lattice structure in which diagonal and horizontal bars participate, arranged in three vertical planes equiangularly distributed over the central tube and defining three independent holes, so that one of them can be used as a hole for the ascent of the operators, through the corresponding ladder parallel to the central tube, and in the other two, horizontal platforms can be arranged on which said operators can work.

The modules will be fixed to each other by means of both the uprights and the central tube thereof by means of the complementary flanges established in correspondence with the upper and lower ends thereof, thus being able to easily adapt the height of the tower to the specific needs of each case.

If necessary, additional supports for telecommunications equipment could be fixed on the uprights themselves, although preferably, and as previously mentioned, this equipment will be directly fixed to the uprights of the tower.

The tower will be anchored to the corresponding foundation, such that the initial modules will have a frustoconical configuration (with the uprights thereof slightly inclined), while the upper modules will have a configuration wherein said uprights are totally vertical.

This confers a great modularity and therefore, versatility to the tower.

The configuration of the uprights means that the equipment or antennas to be installed can be directly fixed to the uprights, thus simplifying the structure, which has a very positive effect in terms of costs and weight reduction.

Likewise, the accessibility to the equipment is maximum, with great comfort and with total safety.

Regarding the wiring guidance, since it is a star structure, said wiring can be separated in order to make the facilities of different operators independent, wiring that will be internally guided through the different vertical tubular uprights, as well as through the horizontal uprights.

From this structuring, the following advantages are derived:
- It enables the descending load from the top to be distributed, both to the weight and to the wind at 50% of the height of the tower.
- It facilitates the installation and removal of new equipment on the structure itself, with great accessibility and safety.
- Easy restructuring of the structure itself in the event of stresses provided for the tower being increased.
- Lightweight, resistant and cost-effective structure.
- Separation of wiring by operator/independence of facilities.

### DESCRIPTION OF THE DRAWINGS

In order to complement the description being made and with the object of helping to better understand the features of the invention, in accordance with a preferred practical exemplary embodiment thereof, said description is accompanied, as an integral part thereof, by a set of drawings where, in an illustrative and non-limiting manner, the following has been represented:
Figure 1 shows a profile view of a lightweight modular tower for communication antennas made according to the object of the present invention.
Figure 2 shows a detail of the tower of Figure 1 at the level of the top thereof.
Figure 3 shows a detail of the tower of Figure 1 at the level of the upper middle area thereof.
Figure 4 shows a plan view of the tower of Figure 1.
Figure 5 shows a view similar to that of Figure 3, but in which an operator is shown in a working situation; it shows a tower on which additional supports have been installed for fixing equipment.
Figure 6 shows a plan view of the tower, in which the arrangement of the work platforms for the operators can be seen.
Figure 7 shows a view similar to that of Figure 1, but in which different equipment from different operators are mounted at different heights on the tower.

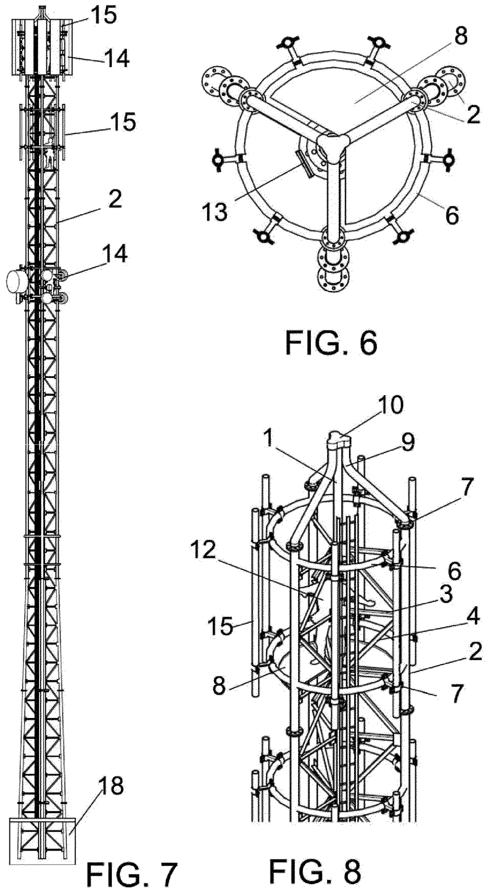

Finally, Figure 8 shows a perspective detail view of the tower at the level of the upper end thereof, the arrangement of the safety platform for the corresponding operator being observed.

### PREFERRED EMBODIMENT OF THE INVENTION

In view of the outlined figures, it can be seen how the tower of the invention is made up of a series of modules obtained from hollow round tubes, wherein a vertical central tube (1) and a series of perimeter uprights (2), specifically three, participate, which are linked together by means of horizontal rings (6), concentric to the central tube (1), forming an envelope that is linked to the central tube through a lattice structure in which diagonal bars (4) and horizontal bars (3) participate, which are fixed to plates (5) associated with both the uprights (2) and the central tube (1), and which are distributed forming three vertical planes equiangularly distributed over the central tube (1) defining three independent holes.

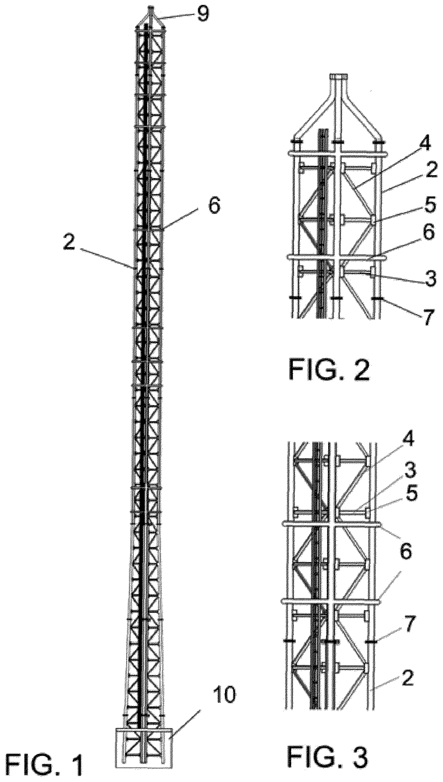

Both the uprights (2) and the central tube (1) are finished in flanges (7) the screwing of which enables some modules to be linked to others, so that the first of the modules or lower module will be partially embedded in the corresponding foundation (10), this module being able to have the uprights (2) thereof slightly inclined, in order to determine a frustoconical structure to reinforce the lower area of the tower, if necessary, or said uprights (2) to be completely vertical, as occurs with the case of the modules that participate in the middle and upper area of the tower, all of this as shown in Figure 1.

The structure will be finished at the top with a top module (9), in which the uprights are linked to the central tube by means of bends and a connecting part (11).

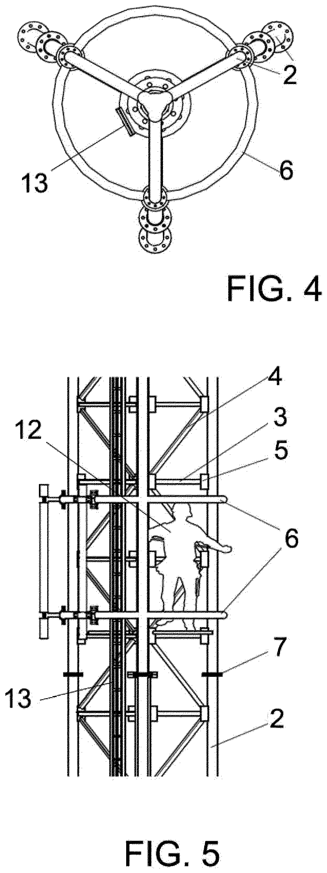

As can be clearly seen in Figures 5, 6 and 8, the described structure defines three independent vertical holes in the mounting thereof, such that one of them is used as a means of ascent for the operators (12), via the corresponding ladder (13) linked to the central tube (1) while the other two can house platforms (8) at different heights on which the corresponding operator (12) can work comfortably and safely.

In this way, and as can be seen in Figure 7, the equipment (14) can be directly mounted on the uprights (2) or, if required, on supports (15) that are also fixed to said uprights (2).

Finally, it only remains to be pointed out that, as has been previously mentioned, the wiring of the equipment (14) may be separated for different operators as it is led through the inside of the different uprights (2) and the horizontal bars (3).

## Claims

1. A lightweight modular tower for telecommunications equipment, being intended to support telecommunications equipment (14), and being supported by a foundation (10), said tower being made up of a series of modules, each module comprising:
a) a vertical central tube (1);
b) a series of perimeter uprights (2) to the central tube (1), which are linked together by means of horizontal rings (6), concentric to the central tube (1), the central tube (1), the perimeter uprights (2) and the horizontal rings (6) each being obtained from hollow round tubes;
c) a lattice structure extending from the uprights (2) to the central tube (1) in which diagonal bars (4) and horizontal bars (3) participate which are distributed forming three vertical planes equiangularly distributed over the central tube (1) defining three independent holes, at least one of said holes
equipped with a ladder (13) associated with the central tube (1), said modules being linked together vertically by means of flanges (7) in which the upper and lower ends of both the central tube (1) and the uprights (2) are finished, forming a modular structure of modifiable height, which extends from the foundation (10) to the upper end of the tower, which is finished at the top in a top module (9), determining the uprights (2) for fixing the telecommunications equipment (14).

2. The lightweight modular tower for telecommunications equipment, according to claim 1, **characterised in that** the uprights (2) adopt a vertical arrangement.

3. The lightweight modular tower for telecommunications equipment, according to claim 1, **characterised in that** the uprights (2) adopt an inclined arrangement, so that the module adopts a frustoconically-shaped configuration.

4. The lightweight modular tower for telecommunications equipment, according to claim 1, **characterised in that** it includes horizontal work platforms (8) at different heights, which extend over two of the three holes that define the lattice structure that links the uprights (2) with the central tube (1).

5. The lightweight modular tower for telecommunications equipment, according to claim 1, **characterised in that** the tower further comprises wiring of the equipment (14), said wiring having been led through the different uprights (2) and the horizontal bars (3).

6. The lightweight modular tower for telecommunications equipment, according to claim 1, **characterised in that** it includes additional supports (15) for equipment (14) that can be fixed to the uprights (2).

7. The lightweight modular tower for telecommunications equipment, according to claim 1, **characterised in that** both the diagonal bars (4) and the horizontal bars (3) are fixed to the uprights (2) and the central tube (1) with the help of intermediate plates (5).

## Patentansprüche

1. Leichter modularer Turm für Telekommunikationseinrichtungen, der zum Tragen von Telekommunikationseinrichtungen (14) bestimmt ist und von einem Fundament (10) getragen wird, **dadurch gekennzeichnet, dass** er aus einer Reihe von Modulen besteht, zu denen folgendes gehört:
a) ein vertikales Mittelrohr (1)
b) und eine Reihe von Streben (2), die das Mittelrohr (1) umgeben und durch horizontale Ringe (6) miteinander verbunden sind, die konzentrisch zum Mittelrohr (1) sind und aus hohlen Rundrohren bestehen
c) eine Gitterstruktur, die sich von den Streben (2) bis zum Mittelrohr (1) erstreckt und zu der diagonale (4) und horizontale Stäbe (3) gehören, die gleichwinklig über das Mittelrohr (1) verteilt sind und drei vertikale Ebenen bilden und drei unabhängige Löcher definieren, von denen mindestens eines mit einer mit dem Mittelrohr (1) verbundenen Leiter (13) versehen ist,
wobei diese Module mithilfe von Flanschen (7), in denen die oberen und unteren Enden sowohl des Mittelrohrs (1) als auch der Streben (2) abschließen, vertikal miteinander verbunden werden können und eine modulare Struktur mit veränderbarer Höhe bilden, die sich vom Fundament (10) bis zum oberen Ende des Turms erstreckt, wo sie oben in Form eines Spitzenmoduls (9) endet, wobei die Streben (2) selbst Mittel zur Befestigung der Telekommunikationseinrichtungen (14) bereitstellen.

2. Leichter modularer Turm für Telekommunikationseinrichtungen nach Anspruch 1, **dadurch gekennzeichnet, dass** die Streben (2) eine vertikale Anordnung annehmen.

3. Leichter modularer Turm für Telekommunikationseinrichtungen nach Anspruch 1, **dadurch gekennzeichnet, dass** die Streben (2) eine geneigte Anordnung aufweisen, sodass das Modul eine kegelstumpfförmige Ausgestaltung annimmt.

4. Leichter modularer Turm für Telekommunikationseinrichtungen nach Anspruch 1, **dadurch gekennzeichnet, dass** er horizontale Arbeitsplattformen (8) in unterschiedlichen Höhen umfasst, die sich über zwei oder drei Löcher erstrecken, die durch die Gitterstruktur definiert werden, welche die Streben (2) mit dem Miitelrohr (1) verbindet.

5. Leichter modularer Turm für Telekommunikationseinrichtungen nach Anspruch 1, **dadurch gekennzeichnet, dass** die Verkabelung der Einrichtungen (14) unabhängig angebracht wird, indem sie durch die verschiedenen Streben (2) und die horizontalen Stäbe (3) geführt wird.

6. Leichter modularer Turm für Telekommunikationseinrichtungen nach Anspruch 1, **dadurch gekennzeichnet, dass** er zusätzliche Träger (15) für Einrichtungen (14) umfasst, die an den Streben (2) befestigt werden können.

7. Leichter modularer Turm für Telekommunikationseinrichtungen nach Anspruch 1, **dadurch gekennzeichnet, dass** sowohl die diagonalen Stäbe (4) als auch die horizontalen Stäbe (3) in Zusammenwirkung mit Platten (5) an den Streben (2) und am Mittelrohr (1) befestigt werden.

## Revendications

1. Tour modulaire légère pour équipements de télécommunications, qui étant du type de celles destinées à supporter des équipements de télécommunications (14), et qui sont supportées par une fondation (10), se **caractérise en ce qu'**elle est constituée d'une série de modules auxquels participent :
a) un tube central vertical (1)
b) et une série de montants (2) périmétriques au tube central (1), qui sont reliés entre eux par le biais d'anneaux (6) horizontaux, concentriques au tube central (1), éléments obtenus à partir de tubes ronds creux
c) une structure en treillis qui s'étend depuis les montants (2) jusqu'au tube central (1) dans laquelle participent des barres diagonales (4) et des barres horizontales (3) qui sont réparties en formant trois plans verticaux répartis équiangulairement sur le tube central (1) définissant trois creux indépendants, au moins l'un d'eux doté d'une échelle (13) associée au tube central (1),
des modules qui sont susceptibles d'être reliés verticalement entre eux par le biais de brides (7) dans lesquelles sont terminées les extrémités supérieure et inférieure aussi bien du tube central (1) que des montants (2), en formant une structure modulaire de hauteur modifiable, qui s'étend depuis la fondation (10) jusqu'à l'extrémité supérieure de la tour, où elle se termine supérieurement par un module de sommet (9), les propres montants (2) déterminant des moyens pour la fixation des équipements (14) de télécommunications.

2. Tour modulaire légère pour équipements de télécommunications, selon la 1^{re} revendication, **caractérisée en ce que** les montants (2) adoptent une disposition verticale.

3. Tour modulaire légère pour équipements de télécommunications, selon la 1^{re} revendication, **caractérisée en ce que** les montants (2) adoptent une disposition inclinée, de sorte que le module adopte une configuration tronconique.

4. Tour modulaire légère pour équipements de télécommunications, selon la 1^{re} revendication, **caractérisée en ce qu'**elle comporte des plates-formes (8) horizontales de travail à différentes hauteurs, qui s'étendent sur deux des trois creux que définit la structure en treillis qui relie les montants (2) au tube central (1).

5. Tour modulaire légère pour équipements de télécommunications, selon la 1^{re} revendication, **caractérisée en ce que** le câblage de l'équipement (14) est rendu indépendant par le biais de son acheminement par l'intermédiaire des différents montants (2) et des barres horizontales (3).

6. Tour modulaire légère pour équipements de télécommunications, selon la 1^{re} revendication, **caractérisée en ce qu'**elle comprend des supports (15) supplémentaires pour des équipements (14) fixables aux montants (2).

7. Tour modulaire légère pour équipements de télécommunications, selon la 1^{re} revendication, **caractérisée en ce qu'**aussi bien les barres diagonales (4) que les barres horizontales (3), sont fixées aux montants (2) et au tube central (1) avec la collaboration de plaques (5) intermédiaires.
